# EUROPEAN PATENT APPLICATION

(11) **EP 4 560 933 A1**
(43) Date of publication of application: **28.05.2025**
(21) Application number: 23849445.4
(22) Date of filing: 02.08.2023
(51) Int. Cl.: H04B 7/185

(54) **COMMUNICATION METHOD, AND APPARATUS**

(30) Priority: 02.08.2022 CN 202210923881
(71) Applicant: Huawei Technologies Co., Ltd., Shenzhen, Guangdong 518129 (CN)
(72) Inventor: CHEN, Ying, Shenzhen, Guangdong 518129 (CN); DU, Yinggang, Shenzhen, Guangdong 518129 (CN); WANG, Jun, Shenzhen, Guangdong 518129 (CN)
(74) Representative: Gill Jennings & Every LLP
(86) International application number: PCT/CN2023/110660
(87) International publication number: WO 2024/027739

(57) **Abstract**

A communication method and apparatus are provided, to ensure service continuity of a terminal and improve user experience. The terminal receives, from a network apparatus, first information that is used to configure a first measurement window of a first signal for the terminal, and then measures the first signal based on the first measurement window, where the terminal does not receive or does not send a second signal in the first measurement window, and the second signal is any signal different from the first signal. According to the foregoing method, the terminal may measure the first signal based on the first measurement window. This can ensure that related information of the first signal is not invalid even when the terminal is in a connected state for a long time, so that service continuity of the terminal can be ensured and service experience can be improved.

## Description

### CROSS-REFERENCE TO RELATED APPLICATIONS

This application claims priority to Chinese Patent Application No. 202210923881.9, filed with the China National Intellectual Property Administration on August 2, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Compared with terrestrial communication, a non-terrestrial network (non-terrestrial network, NTN) has unique advantages. Satellite communication is used as an example. For example, the satellite communication can provide wider coverage, and satellite base stations are not vulnerable to natural disasters or external forces. The satellite communication can provide communication services for areas that cannot be covered by terrestrial communication networks, such as oceans and forests. The satellite communication can also enhance communication reliability, for example, ensure that users on airplanes, trains, and means of transportation obtain high-quality communication services. The satellite communication can also provide more data transmission resources to increase network rates. Therefore, supporting both the terrestrial communication and the satellite communication is an inevitable trend of communication, and has great benefits in terms of wide coverage, reliability, multi-connection, high throughput, and the like.

The satellite communication is characterized by high mobility and a large communication delay. Therefore, a difference from the terrestrial communication is that a terminal device further needs to implement, on the basis of existing uplink synchronization, synchronization based on a global navigation satellite system (global navigation satellite system, GNSS) and an ephemeris or other assistance information.

However, currently, after GNSS information expires, the terminal fails in synchronization, causing a link failure of the terminal. If a service of the terminal is not completed, the service of the terminal may be interrupted, affecting user experience.

### SUMMARY

This application provides a communication method and apparatus, to ensure service continuity of a terminal and improve user experience.

According to a first aspect, this application provides a communication method. The method may be applied to a terminal, a functional module in the terminal, or a processor, a chip, or the like in the terminal. An example in which the method is applied to the terminal is used. The method may include: The terminal receives, from a network apparatus, first information that is used to configure at least one first measurement window of a first signal for the terminal, and then measures the first signal based on the first measurement window, where the terminal does not receive or does not send a second signal in the first measurement window, and the second signal is any signal different from the first signal.

According to the foregoing method, the terminal may measure the first signal based on the first measurement window. This can ensure that related information of the first signal is not invalid even when the terminal is in a connected state for a long time, so that service continuity of the terminal can be ensured and service experience can be improved.

In a possible design, the first signal may be a signal used for positioning, for example, a GNSS signal, a synchronization signal, a reference signal, or a non-satellite signal.

In a possible design, before the terminal receives the first information from the network apparatus, the terminal may send second information to the network apparatus, where the second information indicates measurement duration required by the terminal to measure the first signal. In this way, the network device may accurately configure the first measurement window for the terminal based on the second information.

In a possible design, the second information includes the measurement duration. In this way, the terminal may flexibly send, to the network apparatus, information indicating the measurement duration required by the terminal to measure the first signal.

In a possible design, the second information includes a first index, and the first index corresponds to the measurement duration. The terminal may flexibly indicate, to the network apparatus, the measurement duration required by the terminal to measure the first signal. In addition, an index indication manner can further reduce signaling overheads.

In a possible design, the first information may be acknowledgment information, and the acknowledgment information indicates that duration of the first measurement window is the same as the measurement duration. In this way, the terminal may determine the duration of the first measurement window by using the acknowledgment information. This manner can reduce signaling overheads.

In a possible design, a start position of the first measurement window may be related to an (n+k)^{th} time unit, where an n^{th} time unit is a time unit in which the terminal receives the first information, n is a positive integer, and k is an integer greater than or equal to 0. In this way, the terminal may accurately start to measure the first signal.

In a possible design, that a start position of the first measurement window is related to an (n+k)^{th} time unit may include: The start position of the first measurement window may be an end position of the (n+k)^{th} time unit; or the start position of the first measurement window may be an end position of the (n+k)^{th} time unit and an end position of first data transmission, where the first data transmission occupies a part or all of the (n+k)^{th} time unit. In this way, the terminal may accurately start to measure the first signal side based on an actual situation.

In a possible design, a method in which the terminal measures the first signal based on the first measurement window may be: The terminal starts to measure the first signal based on the first measurement window before or when first validity duration of related information of the first signal ends. In this way, the terminal may obtain valid related information of the first signal as early as possible.

In a possible design, the first validity duration may be original validity duration of the related information of the first signal; or the first validity duration may be received by the terminal from the network apparatus, and the first validity duration is determined based on the original validity duration. In this way, the terminal may measure the first signal based on the validity duration of the related information of the first signal based on an actual situation.

In a possible design, the terminal may send the original validity duration to the network apparatus. In this way, the network apparatus may obtain accurate validity duration of the related information of the first signal, so that the network can accurately configure the first measurement window for the terminal.

In a possible design, an end position of the first measurement window is an end position of the first validity duration. In this way, the terminal may re-obtain valid related information of the first signal before the related information of the first signal expires.

In a possible design, the first information may include information about a first timer, and duration of the first timer is configured duration of the first measurement window of the first signal. Further, a method in which the terminal measures the first signal based on the first measurement window may be: The terminal may measure the first signal during running of the first timer. The first measurement window is configured by using a timer, and complexity is relatively low.

In a possible design, when the terminal does not complete measurement of the first signal during running of the first timer, the terminal may send, to the network apparatus, indication information indicating that measurement of the first signal is not completed; or when the terminal completes measurement of the first signal during running of the first timer, the terminal may send, to the network apparatus, indication information indicating that measurement of the first signal is completed. In this way, the network apparatus may perform a subsequent operation depending on whether the terminal completes measurement of the first signal. For example, when the terminal completes measurement of the first signal, the network apparatus may perform subsequent data scheduling.

In a possible design, a method in which the terminal sends, to the network apparatus, indication information indicating that measurement of the first signal is completed may be: The terminal may send, to the network apparatus before the first timer ends, the indication information indicating that measurement of the first signal is completed; or the terminal may send, to the network apparatus after the first timer ends, the indication information indicating that measurement of the first signal is completed. In this way, the network apparatus may perform subsequent data scheduling in advance or quickly. This avoids a waste of resources.

In a possible design, the first timer is a sleep timer in a discontinuous reception (discontinuous reception, DRX) cycle or an extended discontinuous reception (extended DRX, eDRX) cycle that may be configured by the network apparatus for the terminal; or a duration start position of the first timer is equal to or later than a start position of the sleep timer, and a duration end position of the first timer is earlier than or equal to an end position of the sleep timer. In this way, an existing timer may be reused to configure the first measurement window for the terminal, and implementation is simple.

In a possible design, when the at least one first measurement window is a plurality of first measurement windows, and when the plurality of first measurement windows are within a time corresponding to a sleep timer in a DRX cycle configured by the network apparatus for the terminal, the terminal measures the first signal by using a last first measurement window in the plurality of first measurement windows. This can reduce power consumption of the terminal.

In a possible design, before the terminal receives the first information from the network apparatus, the terminal may send request information to the network apparatus, where the request information is used to request the network apparatus to configure the first measurement window of the first signal for the terminal. In this way, the network apparatus may configure the first measurement window for the terminal after the request of the terminal. This reduces signaling overheads.

In a possible design, the request information is further used to request the start position of the first measurement window. In this way, the network apparatus may configure a clear start position of the first measurement window for the terminal.

In a possible design, before the terminal receives the first information from the network apparatus, the terminal may send first capability information to the network apparatus, where the first capability information indicates that the terminal cannot simultaneously support measurement of the first signal and receiving or sending of the second signal. In this way, it can be ensured that the network apparatus can configure an appropriate first measurement window for the terminal.

In a possible design, when a time domain resource corresponding to the first measurement window overlaps a time domain resource for obtaining a system message, the terminal may determine, based on a priority for measuring the first signal and a priority for obtaining the system message, to measure the first signal or obtain the system message in an overlapping time domain resource. In this way, the terminal may measure the first signal or obtain the system message based on an actual situation, to ensure that measurement of the first signal and obtaining of the system message are relatively accurate.

In a possible design, the terminal may receive third information from the network apparatus, where the third information is used to configure, for the terminal, a time domain resource for obtaining a system message, and the terminal may further obtain the system message based on the third information. In this way, the terminal may obtain other information that assists the terminal in synchronization, so as to increase a synchronization success rate of the terminal.

In a possible design, the terminal may send second capability information to the network apparatus, where the second capability information indicates that the terminal supports reading of a system message. In this way, the network apparatus may accurately configure, for the terminal, a time domain resource for obtaining the system message.

According to a second aspect, this application provides a communication method. The method may be applied to a network apparatus, a functional module in the network apparatus, or a processor, a chip, or the like in the network apparatus. An example in which the method is applied to the network apparatus is used. The method may include: The network apparatus determines first information, and then sends the first information to a terminal, where the first information is used to configure at least one first measurement window of a first signal for the terminal, the terminal does not receive or does not send a second signal in the first measurement window, and the second signal is any signal different from the first signal.

According to the foregoing method, the terminal may measure the first signal based on the first measurement window. This can ensure that related information of the first signal is not invalid even when the terminal is in a connected state for a long time, so that service continuity of the terminal can be ensured and service experience can be improved.

In a possible design, the first signal is a signal used for positioning, for example, a GNSS signal, a synchronization signal, a reference signal, or a non-satellite signal.

In a possible design, before determining the first information, the network apparatus may receive second information from the terminal, where the second information indicates measurement duration required by the terminal to measure the first signal. In this way, the network device may accurately configure the first measurement window for the terminal based on the second information.

In a possible design, the second information may include the measurement duration. In this way, the terminal may flexibly send, to the network apparatus, information indicating the measurement duration required by the terminal to measure the first signal.

In a possible design, the second information may include a first index, and the first index corresponds to the measurement duration. In this way, the terminal may flexibly indicate, to the network apparatus, the measurement duration required by the terminal to measure the first signal. In addition, an index indication manner can further reduce signaling overheads.

In a possible design, the first information may be acknowledgment information, and the acknowledgment information indicates that duration of the first measurement window is the same as the measurement duration. In this way, the terminal may determine the duration of the first measurement window by using the acknowledgment information. This manner can reduce signaling overheads.

In a possible design, a start position of the first measurement window may be related to an (n+k)^{th} time unit, where an n^{th} time unit is a time unit in which the terminal receives the first information, n is a positive integer, and k is an integer greater than or equal to 0. In this way, the terminal may accurately start to measure the first signal.

In a possible design, that a start position of the first measurement window is related to an (n+k)^{th} time unit may include: The start position of the first measurement window may be an end position of the (n+k)^{th} time unit; or the start position of the first measurement window may be an end position of the (n+k)^{th} time unit and an end position of first data transmission, where the first data transmission occupies a part or all of the (n+k)^{th} time unit. In this way, the terminal may accurately start to measure the first signal side based on an actual situation.

In a possible design, the start position of the first measurement window may be before or at an end position of first validity duration of related information of the first signal. In this way, the terminal may obtain valid related information of the first signal as early as possible.

In a possible design, the first validity duration may be original validity duration of the related information of the first signal; or the first validity duration may be sent by the network apparatus to the terminal, and the first validity duration is determined based on the original validity duration. In this way, the terminal may measure the first signal based on the validity duration of the related information of the first signal based on an actual situation.

In a possible design, the network apparatus may receive the original validity duration from the terminal. In this way, the network apparatus may obtain accurate validity duration of the related information of the first signal, so that the network can accurately configure the first measurement window for the terminal.

In a possible design, an end position of the first measurement window may be an end position of the first validity duration. In this way, the terminal may re-obtain valid related information of the first signal before the related information of the first signal expires.

In a possible design, the first information may include information about a first timer, and duration of the first timer is configured duration of the first measurement window of the first signal. The first measurement window is configured by using a timer, and complexity is relatively low.

In a possible design, the network apparatus may receive, from the terminal, indication information indicating that measurement of the first signal is not completed during running of the first timer; or the network apparatus may receive, from the terminal, indication information indicating that measurement of the first signal is completed during running of the first timer. In this way, the network apparatus may perform a subsequent operation depending on whether the terminal completes measurement of the first signal. For example, when the terminal completes measurement of the first signal, the network apparatus may perform subsequent data scheduling.

In a possible design, a method in which the network apparatus receives, from the terminal, indication information indicating that measurement of the first signal is completed during running of the first timer may be: The network apparatus receives, from the terminal before the first timer ends, the indication information indicating that measurement of the first signal is completed; or the network apparatus receives, from the terminal after the first timer ends, the indication information indicating that measurement of the first signal is completed. In this way, the network apparatus may perform subsequent data scheduling in advance or quickly. This avoids a waste of resources.

In a possible design, the first timer is a sleep timer in a discontinuous reception DRX or eDRX cycle that may be configured by the network apparatus for the terminal; or a duration start position of the first timer may be equal to or later than a start position of the sleep timer, and a duration end position of the first timer is earlier than or equal to an end position of the sleep timer. In this way, an existing timer may be reused to configure the first measurement window for the terminal, and implementation is simple.

In a possible design, before the network apparatus sends the first information to the terminal, the network apparatus may receive request information from the terminal, where the request information is used to request the network apparatus to configure the first measurement window of the first signal for the terminal. In this way, the network apparatus may configure the first measurement window for the terminal after the request of the terminal. This reduces signaling overheads.

In a possible design, the request information is further used to request the start position of the first measurement window. In this way, the network apparatus may configure a clear start position of the first measurement window for the terminal.

In a possible design, before the network apparatus determines the first information, the network apparatus may receive first capability information from the terminal, where the first capability information indicates that the terminal cannot simultaneously support measurement of the first signal and receiving or sending of the second signal. In this way, it can be ensured that the network apparatus can configure an appropriate first measurement window for the terminal.

In a possible design, the network apparatus may send third information to the terminal, where the third information is used to configure, for the terminal, a time domain resource for obtaining a system message. Further, the terminal may obtain the system message based on the third information. In this way, the terminal may obtain other information that assists the terminal in synchronization, so as to increase a synchronization success rate of the terminal.

In a possible design, the network apparatus may receive second capability information from the terminal, where the second capability information indicates that the terminal supports reading of a system message. In this way, the network apparatus may accurately configure, for the terminal, a time domain resource for obtaining the system message.

According to a third aspect, this application further provides a communication apparatus. The communication apparatus may be a terminal, or a processor, a chip, a functional module, or the like in the terminal. The communication apparatus has functions of implementing the terminal in the first aspect or the possible design examples of the first aspect. The functions may be implemented by hardware, or may be implemented by hardware executing corresponding software. The hardware or the software includes one or more modules corresponding to the foregoing functions.

In a possible design, a structure of the communication apparatus includes a transceiver unit and a processing unit. These units may perform corresponding functions of the terminal in the first aspect or the possible design examples of the first aspect. For details, refer to the detailed descriptions in the method examples. Details are not described herein again.

In a possible design, a structure of the communication apparatus includes a processor, and optionally further includes a memory and/or a communication interface. The communication interface is configured to receive and send information, a signal, or data, and is configured to communicate and interact with another device in a communication system. The processor is configured to support the communication apparatus in performing corresponding functions of the terminal in the first aspect or the possible design examples of the first aspect. The memory is coupled to the processor, and the memory stores computer instructions or a logic circuit or data that is necessary for the communication apparatus.

According to a fourth aspect, this application further provides a communication apparatus. The communication apparatus may be a network apparatus, or a processor, a chip, a functional module, or the like in the network apparatus. The communication apparatus has functions of implementing the network apparatus in the second aspect or the possible design examples of the second aspect. The functions may be implemented by hardware, or may be implemented by hardware executing corresponding software. The hardware or the software includes one or more modules corresponding to the foregoing functions.

In a possible design, a structure of the communication apparatus includes a transceiver unit and a processing unit. These units may perform corresponding functions of the network apparatus in the second aspect or the possible design examples of the second aspect. For details, refer to the detailed descriptions in the method examples. Details are not described herein again.

In a possible design, a structure of the communication apparatus includes a processor, and optionally further includes a memory and/or a communication interface. The communication interface is configured to receive and send information, a signal, or data, and is configured to communicate and interact with another device in a communication system. The processor is configured to support the communication apparatus in performing corresponding functions of the network apparatus in the second aspect or the possible design examples of the second aspect. The memory is coupled to the processor, and the memory stores computer instructions or a logic circuit or data that is necessary for the communication apparatus.

According to a fifth aspect, an embodiment of this application provides a communication system, including the terminal in the first aspect and the possible designs of the first aspect, the network apparatus in the first aspect and the possible designs of the first aspect, and the like.

According to a sixth aspect, an embodiment of this application provides a computer-readable storage medium. The computer-readable storage medium stores program instructions, and when the program instructions are run on a computer, the computer is enabled to perform the method according to the first aspect and any possible design of the first aspect or according to the second aspect and any possible design of the second aspect in embodiments of this application. For example, the computer-readable storage medium may be any usable medium that can be accessed by the computer. By way of example instead of limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including computer program code or instructions. When the computer program code or the instructions are run on a computer, the method according to the first aspect or any possible design of the first aspect or according to the second aspect or any possible design of the second aspect is performed.

According to an eighth aspect, this application further provides a chip, including a processor. The processor is coupled to a memory, and is configured to read and execute program instructions stored in the memory, so that the chip implements the method according to the first aspect or any possible design of the first aspect or according to the second aspect or any possible design of the second aspect.

For each of the third aspect to the eighth aspect and technical effects that can be achieved in the aspect, refer to the foregoing descriptions of the technical effects that can be achieved in the first aspect or the possible solutions in the first aspect or in the second aspect or the possible solutions in the second aspect. Details are not described herein again.

### BRIEF DESCRIPTION OF DRAWINGS

FIG. 1 is a diagram of an architecture of a communication system according to this application;
FIG. 2 is a diagram of an architecture of another communication system according to this application;
FIG. 3 is a diagram of an architecture of another communication system according to this application;
FIG. 4 is an interaction diagram of a communication method according to this application;
FIG. 5 is a diagram of a start position of a first measurement window according to this application;
FIG. 6 is a diagram of a start position of another first measurement window according to this application;
FIG. 7 is a diagram of a structure of a communication apparatus according to this application;
FIG. 8 is a diagram of a structure of a communication apparatus according to this application; and
FIG. 9 is a diagram of a structure of another communication apparatus according to this application.

### DESCRIPTION OF EMBODIMENTS

The following further describes this application in detail with reference to accompanying drawings.

Embodiments of this application provide a communication method and apparatus, to ensure service continuity of a terminal and improve user experience. The method and the apparatus in this application are based on a same technical concept. Because problem-resolving principles of the method and the apparatus are similar, mutual reference may be made to implementations of the apparatus and the method, and repeated descriptions are not described again.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may represent the following cases: Only A exists, both A and B exist, and only B exists, where A and B may be singular or plural. In addition, "/" indicates "or". For example, a/b indicates a or b.

To describe the technical solutions in embodiments of this application more clearly, the following describes a communication method and apparatus provided in embodiments of this application in detail with reference to the accompanying drawings.

The technical solutions provided in this application may be applied to various communication systems, for example, may be applied to a 5th generation (5th generation, 5G) communication system, for example, a new radio (new radio, NR) system, or may be applied to various communication systems evolved after 5G, for example, a 6th generation (6th generation, 6G) communication system. This application may be further applied to other communication systems and the like that support satellite communication.

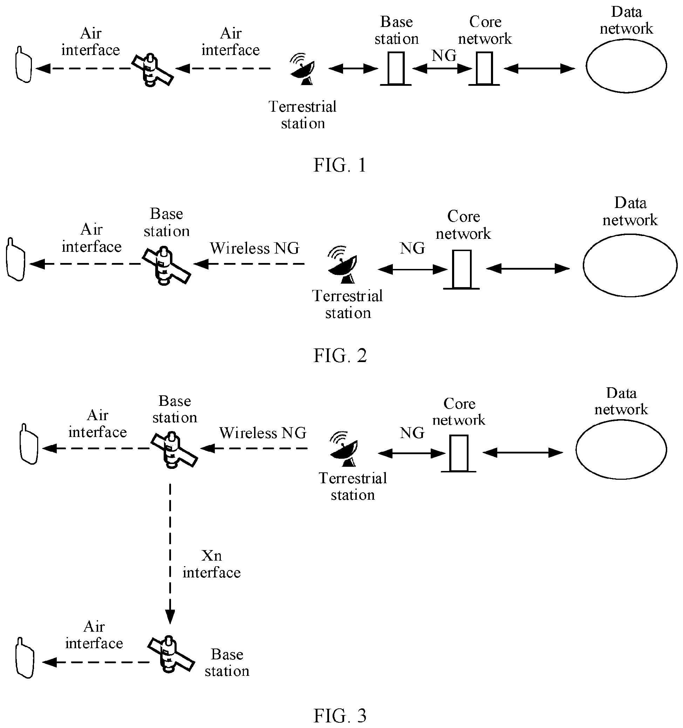

FIG. 1, FIG. 2, and FIG. 3 show examples of architectures of possible communication systems that support satellite communication. The communication method provided in embodiments of this application can be applied to the architecture of any communication system in FIG. 1, FIG. 2, or FIG. 3. The architecture of the communication system may also be referred to as an architecture of a satellite-to-ground convergence network.

In the architecture of the communication system shown in FIG. 1, a base station may be deployed on the ground, a satellite is connected to a terrestrial station through an air interface, and the terrestrial station may be connected to the base station through a wireless or wired link. A terminal on the ground accesses a mobile communication network through an air interface (the air interface may be various types of air interfaces, for example, a 5G air interface), and a satellite serves as a transmission node to forward information about the terminal.

In the architecture of the communication system shown in FIG. 2, a base station is deployed on a satellite, the satellite is connected to a terrestrial station through an air interface, and the terrestrial station may be connected to a core network through a wireless or wired link. A terminal on the ground communicates with a satellite base station through an air interface to access a mobile communication network, a satellite serving as a base station is connected to a terrestrial station through an air interface, that is, an NG interface, and the terrestrial station is connected to a core network through an NG interface. The NG interface may be in a wireless form or a wired form.

Compared with the architecture of the communication system shown in FIG. 2, the architecture of the communication system shown in FIG. 3 additionally has a scenario of communication between satellite base stations. Specifically, satellite base stations may communicate with each other through an Xn interface, and satellites may complete signaling exchange and user data transmission between base stations.

In FIG. 1 to FIG. 3, the terminal may include various types of terminals that support new radio, for example, a mobile phone, a tablet computer, a vehicle-mounted terminal device, and a wearable terminal device. The terminal may access a satellite network through an air interface and initiate a call, network access, or another service. The terminal may be user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a handheld device having a wireless communication function, a computing device, or another processing device connected to a wireless modem, a vehicle-mounted device, a communication device carried on a high-altitude aircraft, a wearable device, an unmanned aerial vehicle, a robot, a smart point of sale (point of sale, POS) machine, a terminal in the internet of things (internet of things, IoT), a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in a telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The base station is an example of a network apparatus, and is mainly configured to: provide a radio access service, schedule a radio resource for an accessed terminal device, and provide a reliable wireless transmission protocol, a data encryption protocol, and the like. The network apparatus in embodiments of this application may be a device in a wireless network. For example, the network apparatus may be a device that is deployed in a radio access network and that provides a wireless communication function for the terminal. For example, the network apparatus may be a radio access network (radio access network, RAN) node that connects the terminal to the wireless network, and may also be referred to as an access network device. The network apparatus in embodiments of this application may be a next generation NodeB (next generation NodeB, gNB) in a 5G system, or may be a base station in a system evolved after 5G, for example, 6G. Specifically, the network apparatus may include but is not limited to an evolved NodeB (evolved NodeB, eNB), a home base station (for example, a home evolved NodeB, or a home NodeB, HNB), a baseband unit (baseband unit, BBU), an active antenna unit (active antenna unit, AAU), a wireless relay node, a wireless backhaul node, a transmission point (transmission point, TP) or a transmission reception point (transmission reception point, TRP), a device that functions as a base station in device-to-device (device-to-device, D2D), vehicle-to-everything (vehicle-to-everything, V2X), or machine-to-machine (machine-to-machine, M2M) communication, or the like. Alternatively, the network apparatus may include a central unit (central unit, CU) and a distributed unit (distributed unit, DU) in a cloud radio access network (cloud radio access network, C-RAN) system, or a network device (which may be deployed on a high-altitude platform or a satellite) in an NTN communication system. Alternatively, the network apparatus may be one antenna panel or a group of antenna panels (including a plurality of antenna panels) of a base station in a 5G mobile communication system. Alternatively, the network device may be a network node that forms a gNB or a transmission point. This is not specifically limited in embodiments of this application.

The core network is mainly used to provide user access control, mobility management, session management, user security authentication, charging, and other functions. The core network includes a plurality of functional units, which can be classified into a control-plane functional entity and a data-plane functional entity.

The terrestrial station is mainly responsible for forwarding signaling and service data between the satellite and the base station or between the satellite and the core network.

The air interface indicates a wireless link between the terminal and the base station.

The Xn interface indicates an interface between satellite base stations, and is mainly used for signaling exchange such as handover.

The NG interface indicates an interface between the base station and the core network, an interface between the terrestrial station and the core network, or an interface between the satellite base station and the terrestrial station (in this case, the interface is a wireless link), and is mainly used for exchanging signaling such as non-access stratum (non-access Stratum, NAS) signaling of the core network and service data of a user.

It should be noted that the communication systems shown in FIG. 1 to FIG. 3 are merely examples for description, and are not intended to limit an architecture of a communication system to which this application is applicable.

Currently, satellite communication has been introduced in the 3GPP specifications. As a communication scenario of 5G communication, the satellite communication is referred to as an NTN, and can support not only various 5G terminals, but also IoT terminals. Compared with terrestrial communication, the satellite communication has unique advantages. For example, the satellite communication can provide wider coverage, and satellite base stations are not vulnerable to natural disasters or external forces. Introduction of the satellite communication in 5G communication can provide communication services for areas that cannot be covered by terrestrial communication networks, such as oceans and forests; enhance 5G communication reliability, for example, ensure that users on airplanes, trains, and means of transportation obtain high-quality communication services; and provide more data transmission resources for the 5G communication to increase network rates. Therefore, supporting both the terrestrial communication and the satellite communication is an inevitable trend of the communication system, and has great benefits in terms of wide coverage, reliability, multi-connection, high throughput, and the like.

The satellite communication is characterized by high mobility and a large communication delay. Therefore, a feature different from that of the terrestrial communication is that a terminal further needs to implement, on the basis of existing uplink synchronization, synchronization based on a GNSS and an ephemeris or other assistance information. For the IoT terminals, most IoT services are characterized by periodic transmission of short packets, and the 3GPP specifications only enhance a communication manner of a short-time connection. The short-time connection herein may be considered as that the terminal initiates access and exits a connected state after sending uplink data. In this process, GNSS information obtained by the terminal before random access is always valid. In other words, in the entire connection process, the GNSS information does not need to be updated, and a synchronization requirement can be met.

However, currently, a communication scenario of a long-time connection is not considered. When the terminal is in the connected state for a long time, the GNSS information may expire, and the terminal needs to re-obtain the GNSS information. Therefore, a current technology cannot support the communication scenario of the long-time connection. In addition, an existing IoT terminal cannot simultaneously perform communication and obtain GNSS information, because normal communication is also affected to some extent if the terminal needs to re-obtain GNSS information in a connected state. Currently, after the GNSS information expires, due to accumulated time and frequency errors, the terminal may fail in synchronization, causing a link failure of the terminal. If a service of the terminal is not completed, the service of the terminal may be interrupted, affecting user experience.

Based on this, this application proposes a communication method, to enhance a communication manner in which a terminal is connected to a satellite for a long time, so as to ensure service continuity of the terminal and improve user experience.

In this embodiment of this application, GNSS signal measurement is a process of performing positioning based on a signal of a navigation satellite to obtain geographical location information of the terminal. GNSS information indicates information related to a geographical location of the terminal, for example, coordinates X, Y, and Z, longitude, latitude, and height, or other information.

It should be noted that, in the following embodiments, the communication method provided in this application is described in detail by using a terminal and a network apparatus as an example. It should be understood that an operation performed by the terminal may alternatively be implemented by a processor, a chip, a chip system, a functional module, or the like in the terminal. An operation performed by the network apparatus may alternatively be implemented by a processor, a chip, a chip system, a functional module, or the like in the network apparatus. This is not limited in this application.

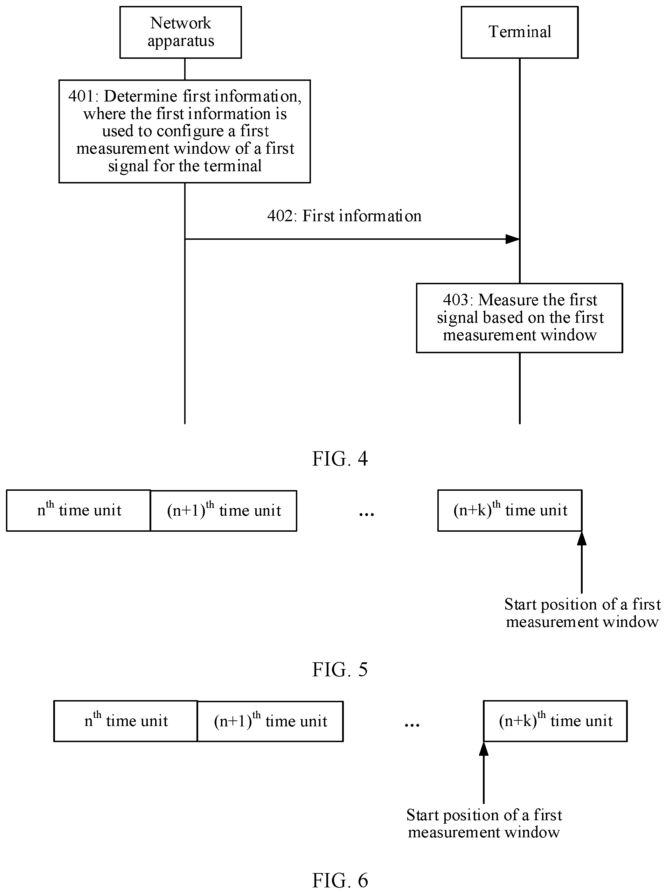

Based on the foregoing descriptions, an embodiment of this application provides a communication method. As shown in FIG. 4, a procedure of the method may include the following steps:
Step 401: A network apparatus determines first information, where the first information is used to configure a first measurement window of a first signal for a terminal, there may be one or more first measurement windows, the terminal does not receive or does not send a second signal in the first measurement window, and the second signal is any signal different from the first signal.
Step 402: The network apparatus sends the first information to the terminal. Correspondingly, the terminal receives the first information from the network apparatus.
Step 403: The terminal measures the first signal based on the first measurement window.

According to the foregoing method, the terminal may measure the first signal in the first measurement window. This can ensure that related information of the first signal is not invalid even when the terminal is in a connected state for a long time, so that service continuity of the terminal can be ensured and service experience can be improved.

Optionally, the first signal may be a signal used for positioning, for example, may be but is not limited to a GNSS signal, a synchronization signal, a reference signal, or a non-satellite signal. In the following example of this application, an example in which the first signal is a GNSS signal is used for description. For example, when the first signal is a GNSS signal, the first measurement window may be referred to as a GNSS window or may have another name. This is not limited in this application.

That the terminal does not receive or does not send a second signal in the first measurement window may also be understood as that the terminal cannot simultaneously process two signals. Correspondingly, in the first measurement window, the network apparatus does not schedule transmission of other data for the terminal.

For example, when the first information is used to configure the first measurement window, the first information may include at least two of the following information: duration of the first measurement window, a start position of the first measurement window, or an end position of the first measurement window. Further, the first information may be implemented by configuring the start position of the first measurement window and the duration of the first measurement window; or the first information may be implemented by configuring the start position and the end position of the first measurement window, or the first information may be implemented by configuring the duration of the first measurement window and the end position of the first measurement window. It should be understood that the first information may alternatively include other content for implementing configuration of the first measurement window. This is not limited in this application.

In an optional implementation, before the terminal receives the first information from the network apparatus, that is, before the network apparatus sends the first information to the terminal device, the terminal may send first capability information to the network apparatus, where the first capability information indicates that the terminal cannot simultaneously support measurement of the first signal and receiving or sending of the second signal. It may also be understood that the first capability information indicates that the terminal cannot simultaneously process two signals.

Optionally, the terminal may send the first capability information to the network apparatus in or after a network access process.

In a possible implementation, the network apparatus may consider that the terminal always cannot simultaneously measure the first signal and perform communication (that is, receive and send the second signal). However, practically, a terminal, for example, a terminal with a relatively strong capability, may simultaneously measure the first signal and perform communication, which means that measurement of the first signal by the terminal does not affect communication of the terminal. In this case, the terminal may report, to the network apparatus, capability information indicating that measurement of the first signal and receiving or sending of the second signal can be simultaneously supported, so that the network apparatus no longer allocates the first measurement window. Alternatively, the terminal may report, to the network apparatus, that duration required for measuring the first signal is 0, which implicitly indicates that the terminal can simultaneously support measurement of the first signal and receiving or sending of the second signal, so that the network apparatus no longer allocates the first measurement window. In this case, the terminal may measure the first signal as required, to obtain valid related information of the first signal. In this application, a corresponding solution using an example in which the terminal cannot simultaneously support measurement of the first signal and receiving or sending of the second signal is used for description.

Different terminals require different duration to complete measurement of the first signal, measurement duration required by a terminal with a relatively strong positioning capability is relatively short, and measurement duration required by a terminal with a relatively weak positioning capability is relatively long. Therefore, in a possible manner, before the terminal receives the first information from the network apparatus, the terminal may send second information to the network apparatus, where the second information indicates measurement duration required by the terminal to measure the first signal.

In an example a1, the second information may include the measurement duration. In this way, the terminal may directly notify the network apparatus of the measurement duration required for measuring the first signal.

In an example a2, the second information may include a first index, and the first index is related to the measurement duration, so that the network apparatus determines the measurement duration based on the first index.

Optionally, the terminal may send the first index to the network apparatus in a unit, where the unit may be but is not limited to slot, millisecond (ms), second (s), slot, subframe, symbol, or the like. For example, in a unit of s, a correlation between the first index and the measurement duration may be shown in Table 1:

**Table 1**

| Index | 0 | 1 | 2 | 3 | 4 | 5 |
|---|---|---|---|---|---|---|
| Measurement duration | 1s | 2s | 3s | 4s | 5s | 6s |

As shown in Table 1, when the first index is 0, the measurement duration is 1s. Other similar cases are not enumerated herein.

The foregoing unit may be negotiated by the terminal and the network apparatus, or the terminal may include a corresponding unit and the first index in the second information.

Optionally, the first index may alternatively indicate a measurement capability, a measurement rank, or the like of the terminal. This is not limited in this application.

Optionally, measurement duration corresponding to different indexes may alternatively be broadcast by the network apparatus, and the terminal sends the first index to the network apparatus to determine the corresponding measurement duration.

Practically, because the related information of the first signal is invalid due to movement of the terminal, the terminal needs to re-measure the first signal, for example, perform GNSS positioning. However, the static terminal may not need to re-measure the first signal, for example, may not need to perform GNSS positioning.

Further, in an optional implementation, if the terminal is static, the terminal may report, to the network apparatus, the second information indicating that the required measurement duration is 0 (that is, the terminal reports that the required measurement duration is 0); or the terminal may not report the second information to the network apparatus (that is, does not need to report that the required measurement duration is 0), and the network apparatus may consider by default that the terminal does not need to measure the first signal in the connected state.

In another optional implementation, if the terminal is static, the terminal may report, to the network apparatus, that validity duration of the related information of the first signal may be infinite, to indicate that the terminal does not need to measure the first signal; or the terminal may not report validity duration (for example, GNSS validity duration) of the related information of the first signal to the network apparatus, and the network apparatus may consider by default that the validity duration of the related information of the first signal is infinite and the terminal does not need to measure the first signal in the connected state.

In still another optional implementation, if the terminal is static or moves at an extremely low speed, the terminal may report validity duration that is of the related information of the first signal and that is maximum duration to the network apparatus, where the first measurement window allocated by the network apparatus may be of a relatively large periodicity.

In a possible example, when the terminal sends the second information to the network apparatus, the first information may be acknowledgment information, and the acknowledgment information indicates that the duration of the first measurement window is the same as the measurement duration. In other words, after the terminal sends the second information to the network apparatus, the network apparatus replies with the acknowledgment information to the terminal, to acknowledge that the first signal can be measured based on the measurement duration required by the terminal.

In a possible manner, the start position of the first measurement window may be indicated by using the first information, that is, the first information may also indicate the start position of the first measurement window.

In a possible manner, the start position of the first measurement window may be related to an (n+k)^{th} time unit, where an n^{th} time unit may be a time unit in which the terminal receives the first information, n is a positive integer, and k is an integer greater than or equal to 0. Optionally, k may be preset, or may be configured by the network apparatus.

For example, the time unit may be but is not limited to a subframe, a slot, or the like.

Optionally, there may be the following methods in which the start position of the first measurement window is related to the (n+k)^{th} time unit:
Method b1: The start position of the first measurement window may be an end position of the (n+k)^{th} time unit, as shown in FIG. 5.

In the method b1, when k is 0, it indicates that the terminal starts to measure the first signal at an end position of a time unit in which the terminal receives the first information; or when k is greater than 0, it indicates that the terminal starts to measure the first signal at an end position of a time unit after a time unit in which the terminal receives the first information.

Method b2: The start position of the first measurement window may be a start position of the (n+k)^{th} time unit, as shown in FIG. 6.

In the manner b2, k is not 0. In other words, in the manner b2, k is an integer greater than or equal to 1.

Manner b3: The start position of the first measurement window may be an end position of the (n+k)^{th} time unit and an end position of first data transmission, where the first data transmission occupies a part or all of the (n+k)^{th} time unit.

In the manner b3, if first data is being transmitted in the (n+k)^{th} time unit, the terminal starts to measure the first signal at a later position in the end position of the (n+k)^{th} time unit and the end position of the first data transmission.

Manner b4: The start position of the first measurement window may be a start position of the (n+k)^{th} time unit and an end position of first data transmission, where the first data transmission occupies a part or all of the (n+k)^{th} time unit.

In the manner b4, k is an integer greater than or equal to 1.

In the manner b4, if first data is being transmitted in the (n+k)^{th} time unit, the terminal starts to measure the first signal after the start position of the (n+k)^{th} time unit and at the end position of the first data transmission.

It should be noted that, in this application, that the terminal starts to measure the first signal may also be understood as that the terminal starts the first measurement window.

Optionally, the start position of the first measurement window may be pre-negotiated by the terminal and the network apparatus, or may be indicated by the network apparatus to the terminal (for example, indicated by using the first information). For example, when the start position of the first measurement window is pre-negotiated, that the network apparatus configures the first measurement window for the terminal by using the first information may be understood as that the network apparatus configures, for the terminal, duration for measuring the first signal, where the duration of the first measurement window is greater than or equal to the required measurement duration reported by the terminal.

In an optional implementation, that the terminal measures the first signal based on the first measurement window may be specifically: The terminal starts to measure the first signal based on the first measurement window before or when first validity duration of the related information of the first signal ends.

For example, a timer may be used to control to start to measure the first signal based on the first measurement window, and duration of the timer may be less than or equal to the first validity duration.

Optionally, the first validity duration may be original validity duration of the related information of the first signal; or the first validity duration may be received by the terminal from the network apparatus, and the first validity duration is determined based on the original validity duration.

For example, the terminal may further send the original validity duration to the network apparatus. Optionally, after determining the original validity duration of the related information of the first signal, the terminal may send the original validity duration to the network apparatus by using radio resource control (radio resource control, RRC) signaling. For example, the original validity duration may be but is not limited to any one of the following: 10s, 20s, 30s, 40s, 50s, 60s, 5 minutes (min), 10 minutes, 15 minutes, 20 minutes, 25 minutes, 30 minutes, 60 minutes, 90 minutes, 120 minutes, or infinity (that is, infinite duration). For example, when the original validity duration is 10s, after 10s, the terminal and the network apparatus consider by default that the related information of the first signal expires.

After the network apparatus receives the original validity duration from the terminal, because the network apparatus performs closed-loop timing advance (timing advance, TA) adjustment, duration for starting measurement of the first signal may be prolonged. Therefore, the network apparatus may determine the first validity duration based on the original validity duration, and then the network apparatus sends the first validity duration to the terminal. In this case, the first validity duration may be greater than or equal to the original validity duration.

Optionally, when the first validity duration is determined based on the original validity duration, the first validity duration may alternatively be less than or equal to the original validity duration, so that the terminal can complete measurement of the first signal before the original validity duration ends.

Optionally, the end position of the first measurement window may be an end position of the first validity duration. For example, when the terminal starts to measure the first signal before the first validity duration ends, the end position of the first measurement window may be the end position of the first validity duration.

For example, the first measurement window may be a last period of time of the first validity duration. For example, the first validity duration is 10s, and last 1s of 10s may be used as the first measurement window, that is, the first signal is measured from 9s to 10s.

In an optional implementation, the first information may include information about a first timer, and duration of the first timer is configured duration of the first measurement window of the first signal. Further, that the terminal measures the first signal based on the first measurement window may be specifically: The terminal measures the first signal during running of the first timer.

When the terminal does not complete measurement of the first signal during running of the first timer, the terminal may send, to the network apparatus, indication information indicating that measurement of the first signal is not completed; or when the terminal completes measurement of the first signal during running of the first timer, the terminal may send, to the network apparatus, indication information indicating that measurement of the first signal is completed.

There may be the following manners in which the terminal sends, to the network apparatus, the indication information indicating that measurement of the first signal is completed:
Manner c1: The terminal sends, to the network apparatus before the first timer ends, the indication information indicating that measurement of the first signal is completed.

In the manner c1, if the terminal completes measurement of the first signal before the first timer ends, the terminal may send, to the network apparatus before the first timer ends, the indication information indicating that measurement of the first signal is completed, so that the network apparatus can perform data scheduling in advance. This avoids a waste of resources.

In a possible implementation, that the terminal sends, before the first timer ends, the indication information indicating that measurement of the first signal is completed includes: When the terminal receives an allow indication sent by the network apparatus, where the allow indication indicates that the terminal is allowed to send, before the first timer ends, the indication information indicating that measurement of the first signal is completed, and the terminal completes measurement of the first signal before the first timer ends, the terminal sends, before the first timer ends, the indication information indicating that measurement of the first signal is completed.

In a possible implementation, the allow indication is determined based on third capability information reported by the terminal and/or a first request of the terminal, the third capability information indicates whether the terminal supports sending, before the first timer ends, of the indication information indicating that measurement of the first signal is completed, and the first request is used to request to send, before the first timer ends, the indication information indicating that measurement of the first signal is completed.

For example, if the terminal does not support sending, before the first timer ends, of the indication information indicating that measurement of the first signal is completed, the network apparatus does not send the allow indication, or the allow indication indicates that the terminal is not allowed to send, before the first timer ends, the indication information indicating that measurement of the first signal is completed. On the contrary, if the terminal supports sending, before the first timer ends, of the indication information indicating that measurement of the first signal is completed, the network apparatus sends the allow indication, where the allow indication indicates that the terminal is allowed to send, before the first timer ends, the indication information indicating that measurement of the first signal is completed.

For example, the network apparatus sends the allow indication only when the third capability information indicates that sending, before the first timer ends, of the indication information indicating that measurement of the first signal is completed is supported, and the network apparatus receives the first request. When the network apparatus does not receive the first request, the network apparatus does not send the allow indication, or the allow indication indicates that the terminal is not allowed to send, before the first timer ends, the indication information indicating that measurement of the first signal is completed.

For example, the first request of the terminal implicitly indicates that the terminal supports sending, before the first timer ends, of the indication information indicating that measurement of the first signal is completed. After receiving the first request, the network apparatus sends the allow indication, where the allow indication indicates that the terminal is allowed to send, before the first timer ends, the indication information indicating that measurement of the first signal is completed. On the contrary, the network apparatus does not send the allow indication, or the allow indication indicates that the terminal is not allowed to send, before the first timer ends, the indication information indicating that measurement of the first signal is completed.

In the foregoing possible implementation, the network apparatus sends the allow indication as required based on a capability supported by the terminal or a request of the terminal, so that communication resources can be reduced.

In a possible implementation, it is determined, based on duration (remaining duration) from a time at which measurement of the first signal is completed to an end time of the first timer, whether to send, before the first timer ends, the indication information indicating that measurement of the first signal is completed. When the remaining duration is sufficient for data transmission, the indication information indicating that measurement of the first signal is completed is sent before the timer ends, so that the network apparatus can schedule data transmission in advance. This avoids a waste of resources. When the remaining duration is relatively short, the indication information indicating that measurement of the first signal is completed is sent after the first timer ends, so that the network apparatus resumes communication. In this case, the indication information indicating that measurement of the first signal is completed may be transmitted based on data scheduling of the network apparatus.

For example, when the terminal completes measurement of the first signal before the first timer ends, and first duration is greater than or equal to a first threshold, the terminal sends, to the network apparatus before the first timer ends, the indication information indicating that measurement of the first signal is completed, where the first duration is duration from the time at which measurement of the first signal is completed to the end time of the first timer.

For example, when the terminal completes measurement of the first signal before the first timer ends, and first duration is less than a first threshold, the terminal sends, to the network apparatus after the first timer ends, the indication information indicating that measurement of the first signal is completed, where the first duration is duration from the time at which measurement of the first signal is completed to the end time of the first timer.

For example, when the terminal completes measurement of the first signal before the first timer ends, and first duration is greater than a first threshold, the terminal sends, to the network apparatus before the first timer ends, the indication information indicating that measurement of the first signal is completed, where the first duration is duration from the time at which measurement of the first signal is completed to the end time of the first timer.

For example, when the terminal completes measurement of the first signal before the first timer ends, and first duration is less than or equal to a first threshold, the terminal sends, to the network apparatus after the first timer ends, the indication information indicating that measurement of the first signal is completed, where the first duration is duration from the time at which measurement of the first signal is completed to the end time of the first timer. The first threshold may be configured by the network apparatus, or may be predefined in a protocol.

Manner c2: The terminal sends, to the network apparatus after the first timer ends, the indication information indicating that measurement of the first signal is completed.

In the manner c2, after the first timer ends, the network device may continue subsequent data scheduling, to resume receiving or sending of the second signal, that is, resume communication.

In a possible implementation, transmission of the indication information indicating that measurement of the first signal is completed is implemented in a contention-based random access process. In this manner, the network apparatus may be notified as early as possible that the terminal has completed measurement of the first signal. This reduces a waste of resources to a greater extent.

For four steps of random access, in a possible implementation, the indication information indicating that measurement of the first signal is completed is carried in a random access message 3 (Msg3). Optionally, before the terminal sends the indication information indicating that measurement of the first signal is completed, the terminal sends a random access preamble to the network apparatus, and the network apparatus receives the random access preamble (that is, Msg1), and sends a random access response (that is, Msg2) to the terminal.

For two steps of random access, in a possible implementation, the indication information indicating that measurement of the first signal is completed is carried in a random access message A (MsgA). In a possible implementation, transmission of the indication information indicating that measurement of the first signal is completed is implemented by sending a specific signal. Specifically, a sequence of the specific signal corresponds to the indication information indicating that measurement of the first signal is completed. After receiving the specific signal, the network apparatus may determine that measurement of the first signal is completed. For example, the specific signal is a non-contention based random access preamble, or the specific signal is a sequence generated by a specific parameter set. This manner can reduce signaling overheads and further reduce resources.

In a possible implementation, transmission of the indication information indicating that measurement of the first signal is completed is implemented by using a specific transmission resource. Specifically, the specific transmission resource corresponds to the indication information indicating that measurement of the first signal is completed. After receiving the signal on the specific resource, the network apparatus may determine that measurement of the first signal is completed. This manner can reduce signaling overheads and further reduce resources.

Optionally, when the terminal does not complete measurement of the first signal during running of the first timer, when the first timer ends, the terminal may initiate a radio link failure procedure and exit the connected state.

For example, when the terminal does not complete measurement of the first signal during running of the first timer, when the first timer ends, the terminal may send, to the network apparatus, the indication information indicating that measurement of the first signal is not completed, and then the terminal initiates the radio link failure procedure and exits the connected state.

In a possible design, when the terminal does not need to perform data transmission, after the terminal sends, to the network apparatus, the indication information indicating that measurement of the first signal is not completed, the terminal may complete measurement of the first signal within first preset duration after the first timer ends, and then the terminal sends, to the network apparatus, the indication information indicating that measurement of the first signal is completed.

In an optional manner, when the terminal does not complete measurement of the first signal during running of the first timer, the terminal may initiate the radio link failure procedure when the first timer ends, and continue to measure the first signal within second preset duration after the first timer ends. If the terminal completes measurement of the first signal within the second preset duration, the terminal ends the radio link failure procedure. If the terminal does not complete measurement of the first signal within the second preset duration, the terminal continues the radio link failure procedure and exits the connected state. For example, the radio link failure procedure may be understood as a procedure of clearing buffered data or signaling. For example, the terminal may send an indication sequence, for example, a preamble (preamble), to the network apparatus, to initiate the procedure of clearing buffered data or signaling.

In an optional implementation, the first timer may be a sleep timer in a DRX cycle or an eDRX cycle configured by the network apparatus for the terminal; or a duration start position of the first timer may be equal to or later than a start position of the sleep timer, and a duration end position of the first timer is earlier than or equal to an end position of the sleep timer, or the first timer may be a newly defined timer, or the first timer may reuse another existing timer. This is not limited in this application. In this application, sleep may be understood as inactivity.

An existing DRX or eDRX cycle is a discontinuous reception cycle. In each cycle, the terminal wakes up periodically for a period of time to receive data. For example, the terminal monitors and receives a physical downlink control channel (physical downlink control channel, PDCCH) in this period of time. In this period of time, the terminal is in an active state (which may also be referred to as an active mode), in other words, the terminal can transmit data in the active state. In each cycle, the terminal may not monitor or may not receive a PDCCH for a period of time to reduce power consumption. In this period of time, the terminal is in an inactive state (which may also be referred to as an inactive mode), or it may be understood that the terminal sleeps in the inactive state. When the DRX or eDRX cycle has the inactive state of the terminal, the network apparatus may appropriately allocate the DRX or eDRX cycle to ensure that the terminal can measure the first signal in a DRX or eDRX inactive-state period (that is, a sleep timer period), and the terminal in the inactive state is in a power-saving sleep state. Therefore, measurement of the first signal in this period of time does not conflict with communication. In this case, the sleep timer may be used as the first timer.

Optionally, when the duration start position of the first timer is equal to or later than the start position of the sleep timer, and the duration end position of the first timer is earlier than or equal to the end position of the sleep timer, the terminal may select an appropriate time period as the duration of the first timer in a preset manner or independently. For example, the terminal may enter the sleep state after completing measurement of the first signal during running of the first timer. In this case, the duration end position of the first timer is earlier than the end position of the sleep timer. For another example, when the end position of the first timer is equal to the end position of the sleep timer, the terminal may enter the active state after completing measurement of the first signal during running of the first timer, that is, the terminal may complete measurement of the first signal before switching to the active state in the DRX or eDRX cycle. It may also be understood that the terminal completes measurement of the first signal in a last period of time of the DRX or eDRX inactive-state period, where duration of the last period of time is less than or equal to duration of the inactive state. This can avoid a waste of resources.

In an optional manner, the duration end position of the first timer may be earlier than or equal to the end position of the sleep timer. In other words, a relationship between the duration start position of the first timer and the start position of the sleep timer may not be limited, that is, the duration start position of the first timer is not limited.

Optionally, when the network apparatus configures a plurality of first measurement windows, and the plurality of first measurement windows are within a time corresponding to the sleep timer in the DRX or eDRX cycle, the terminal may measure the first signal by using a last first measurement window instead of another first measurement window in the plurality of first measurement windows. This reduces power consumption of the terminal. A 1^{st} measurement window in the plurality of first measurement windows may be partially or completely within a first sleep timer, or the last first measurement window may be partially or completely within the first sleep timer. In this application, the foregoing case may be understood as that the plurality of first measurement windows are within the time corresponding to the sleep timer in the DRX or eDRX cycle.

In an example implementation, when the terminal is in the DRX or eDRX inactive state, the terminal may independently determine that measurement of the first signal is completed in the last period of time of the DRX or eDRX inactive-state period, that is, the last period of time of the DRX or eDRX inactive-state period is used as the first measurement window. Optionally, in this case, the terminal may report the start position or the end position of the first measurement window to the network apparatus, or the terminal may report, to the network apparatus, the information indicating that measurement of the first signal is completed, or the terminal indicates, to the network apparatus, that the first signal is measured in the last period of time of the DRX or eDRX inactive-state period, to notify the network apparatus that the terminal measures the first signal in the last period of time of the DRX or eDRX inactive-state period.

The first measurement window may be a segment of measurement window configured by the network apparatus, and includes duration and a start position/an end position of the measurement window, or a periodicity and duration of the measurement window. The first measurement window may alternatively be implemented by using a timer, and the timer may include a timer configured by the network apparatus and/or a timer maintained by the terminal. Optionally, when the network apparatus configures a scheduling timer, the terminal starts to measure the first signal based on a start time of the timer, and ends measurement based on an end time of the timer. Optionally, the first signal is measured by the terminal, that is, the terminal independently maintains the timer. In a possible implementation, the terminal may independently start a measurement timer based on a measurement window in the last period of time of the inactive state, and end the timer before entering the active state.

Optionally, the network apparatus may configure a periodic measurement window and duration of the measurement window. When the terminal is in the inactive state, the terminal may delay the measurement window, but does not change a periodic configuration of the measurement window. After entering the active state, the terminal may continue to perform measurement in the periodic measurement window configured by the network apparatus, or may skip one or more measurement windows based on a measurement status of the terminal in the inactive state. Optionally, whether the terminal skips a measurement window may be determined based on a threshold. For example, if an interval between GNSS remaining validity duration and a next measurement window is greater than a threshold, the terminal does not skip a current measurement window; or if an interval between GNSS remaining validity duration and a next measurement window is less than a threshold, the terminal skips a current measurement window. The threshold may be preset.

For example, a relationship between measurement of the first signal (GNSS measurement is used as an example for description) and the inactive state of the terminal may be as follows:
(1) The network apparatus configures a GNSS measurement window. The GNSS measurement window is completely within the inactive-state period of the terminal, and an end position is not later than an end position of the inactive state. In this case, in the foregoing manner, the terminal may perform GNSS measurement in the last period of time of the inactive state.
(2) The network apparatus configures a GNSS measurement window. A part of the GNSS measurement window is within the inactive-state period of the terminal, and an end position is earlier than an end position of the inactive state, which indicates that a start position of the GNSS measurement window is earlier than a start position of the inactive state. In this case, the terminal may delay the start position of the GNSS measurement, so that the end position of the GNSS measurement is aligned with the end position of the inactive state.
(3) The network apparatus configures a GNSS measurement window. A part of the GNSS measurement window is within the inactive-state period of the terminal, and an end position is later than an end position of the inactive state. In other words, the terminal has entered the active state when GNSS measurement ends.
(4) The network apparatus configures a plurality of GNSS measurement windows. The plurality of GNSS measurement windows are within the inactive-state period of the terminal or partially overlap the inactive-state period of the terminal. A 1^{st} GNSS measurement window may be within the inactive-state period of the terminal, or may partially overlap the inactive-state period of the terminal. A last GNSS measurement window may be within the inactive-state period of the terminal, or may partially overlap the inactive-state period of the terminal. The terminal may perform GNSS measurement in the last GNSS measurement window instead of another GNSS measurement window.

In a possible implementation, any one or more of the foregoing four cases may coexist.

The terminal does not perform data transmission in the inactive state, and a GNSS measurement result may be used by the terminal to implement uplink synchronization in the active state. The GNSS measurement window is enabled to be within the last period of time of the inactive state of the terminal, so that the GNSS measurement result can be used for subsequent communication in the active state in time. This ensures accuracy of uplink synchronization and can reduce power consumption.

Optionally, when the terminal measures the first signal, a state of the terminal may be referred to as a measurement active state, for example, a GNSS measurement active state, or may be referred to as another state. The another state may be a state defined for the terminal.

In an optional implementation, in the DRX or eDRX cycle, there are a plurality of timers in the active state of the terminal, for example, including an inactivity timer and a retransmission timer. The terminal may measure the first signal based on an idle time, where the idle time for measuring the first signal may be understood as a running time corresponding to the first timer.

In a possible manner, the first information may not include timer information. The terminal maintains a timer, and the terminal notifies the network apparatus of start and duration of the timer, or the terminal notifies the network apparatus of a start time of the timer and notifies the network apparatus that the timer ends after measurement of the first signal is completed, so that the network apparatus does not perform data scheduling during measurement of the first signal by the terminal, and the network apparatus performs data scheduling after measurement of the first signal ends. The terminal does not perform control channel detection in this period.

In an optional manner, the first measurement window configured by the network apparatus for the terminal may be at a time position other than the inactive state of the DRX or eDRX cycle. It may also be understood that, when the terminal needs to measure the first signal, and the terminal is not in the inactive state of the DRX or eDRX cycle, the network needs to configure the first measurement window.

In an optional implementation, the network apparatus may configure the DRX or eDRX cycle based on the validity duration of the related information of the first signal reported by the terminal, or based on possible shortest validity duration of the related information of the first signal. Subsequently, the terminal measures the first signal during the DRX or eDRX based on the foregoing method. The foregoing method is, for example, a method for measuring the first signal by reusing the sleep timer in the DRX or eDRX cycle.

Optionally, when the terminal does not perform measurement of the first signal in the first measurement window or does not complete measurement of the first signal in the first measurement window, that is, when measurement of the first signal fails, the terminal may enter a radio link failure state, or after the terminal starts to wait for a period of time when the first measurement window ends, if the network apparatus does not allocate a new resource for measurement of the first signal, the terminal may enter a radio link failure state.

In an optional implementation, the first information may be downlink control information (downlink control information, DCI), a media access control control element (media access control control element, MAC CE), RRC signaling, or the like, or the first information may be included in DCI, a MAC CE, RRC signaling, or the like. This is not limited in this application.

Optionally, the network apparatus may dynamically configure the first measurement window of the first signal for the terminal by using the first information, that is, configure the first measurement window when required; or may semi-statically or periodically configure the first measurement window. This is not limited in this application. For example, when the first signal is a GNSS signal, after the terminal reports GNSS validity duration, the network apparatus may notify the terminal of a GNSS window by using corresponding signaling before a GNSS information expires, or may allocate a periodic GNSS window in advance. Because a speed of the terminal may change, the terminal may notify the network apparatus of new GNSS validity duration of the terminal, and the network apparatus may allocate a GNSS window based on the new GNSS validity duration.

In an optional manner, before the terminal receives the first information from the network apparatus, the terminal may send request information to the network apparatus, where the request information is used to request the network apparatus to configure the first measurement window of the first signal for the terminal. In other words, when the terminal needs to measure the first signal, the terminal may request the network apparatus to configure the first measurement window of the first signal for the terminal.

For example, the request information may be further used to request the start position of the first measurement window.

Optionally, when the terminal reports the validity duration of the related information of the first signal to the network apparatus, the terminal may not request the start position of the first measurement window, and the network apparatus may allocate the start position of the first measurement window based on the validity duration. This saves request overheads of the terminal.

In addition to the related information of the first signal, some other information may be required by the terminal to complete synchronization. For example, for satellite communication, when the first signal is a GNSS signal, delay-related information such as ephemeris information or a common timing advance may be further required. A delay from the terminal to a synchronization point may be obtained through calculation by combining the information with GNSS information, so as to implement timing advance pre-compensation. Information such as the ephemeris or the common timing advance changes with movement of a satellite. Currently, information used for synchronization such as the ephemeris or the common timing advance is delivered in a broadcast message. However, an existing terminal (for example, an IoT terminal) does not read a system message in a connected state. Therefore, the terminal needs to re-obtain the information when or before validity duration of the information such as the ephemeris or the common timing advance expires. One reading window may also be required for obtaining the information. Delivery of the system message is configured by the network apparatus, and the network apparatus learns of a validity period and a configuration update periodicity of the system message. Therefore, the network apparatus may directly allocate a window of the system message in the connected state. In a possible implementation, the network apparatus sends third information to the terminal. Correspondingly, the terminal receives the third information from the network apparatus, where the third information is used to configure, for the terminal, a time domain resource for obtaining the system message. Further, the terminal obtains the system message based on the third information. Configuring a time domain resource for obtaining the system message may also be understood as configuring a system message reading window, and the time domain resource for the system message may also be understood as a time domain resource set corresponding to the system message reading window.

Optionally, for a method for configuring the system message reading window, refer to the method for configuring the first measurement window. For example, duration of the system message reading window may be allocated by using an index, and the index is related to the duration of the system message reading window. Alternatively, the network apparatus may directly allocate one or more time units. Details are not described herein in this application.

Optionally, the system message reading window may alternatively be allocated by using a timer. The timer may reuse a current timer or may be a newly defined timer. This is not limited in this application. Optionally, the timer corresponding to the system message reading window is different from the timer corresponding to the first measurement window, that is, the terminal performs different operations during running of different timers.

In an optional implementation, when a time domain resource corresponding to the first measurement window overlaps a time domain resource for obtaining a system message, the terminal may determine, based on a priority for measuring the first signal and a priority for obtaining the system message, to measure the first signal or obtain the system message in an overlapping time domain resource.

In a specific case, when a start position of the time domain resource corresponding to the first measurement duration is the same as a start position of the time domain resource for obtaining the system message, the terminal device determines, based on the priority for measuring the first signal and the priority for obtaining the system message, to measure the first signal or obtain the system message.

Optionally, when the system message reading window is allocated by using a timer, and the first measurement window corresponds to the first timer, if the timer corresponding to the system message reading window and the first timer simultaneously start, the terminal may determine, based on a priority for measuring the first signal and a priority for obtaining the system message, to measure the first signal or obtain the system message.

For example, the terminal may preferentially measure the first signal. If the system message is not successfully decoded, the terminal enters the radio link failure state.

For another example, the terminal may preferentially measure the first signal. If the system message is not successfully decoded, the terminal requests the network apparatus to re-obtain the system message, for example, obtain ephemeris information and common delay information.

For another example, the terminal preferentially measures the first signal. If the system message is not successfully decoded, the terminal feeds back to the network apparatus that the system message is not obtained. In this case, information such as an old ephemeris expires, the terminal does not send uplink data, waits for the network apparatus to reallocate a window based on a periodicity of the system message to read the system message, and then performs uplink data communication after the terminal successfully decodes the system message. Alternatively, the terminal enters the radio link failure state if the terminal still does not obtain allocation of the system message within a preset period of time.

For another example, the terminal may preferentially obtain the system message, and then measure the first signal. The terminal may request a new measurement window of the first signal, to preferentially obtain the system message. For example, the terminal may request the new measurement window of the first signal before obtaining the system message, or the terminal may request the new measurement window of the first signal after obtaining the system message. A method for requesting the new measurement window of the first signal by the terminal is not limited in this application.

For another example, the network apparatus may extend a window. For example, the network apparatus may advance a start position of a window for measuring the first signal and extend a window length, so that the terminal first measures the first signal and then obtains the system message.

For another example, the network apparatus may delay an end time of the first measurement window, and the terminal first obtains the system message and then measures the first signal.

Generally, a periodicity and a delivery time of the system message are fixed, and measurement of the first signal is relatively flexible. Therefore, in some possible manners, the terminal may preferentially read the system message.

In an optional implementation, when both the terminal and the network apparatus learn of the update periodicity and the validity period of the system message, and when the system message needs to be read, the network apparatus may not perform data scheduling, and the terminal may obtain the system message. In this case, the network apparatus may not configure, for the terminal, the time domain resource for obtaining the system message.

In an example, the terminal may send second capability information to the network apparatus, where the second capability information indicates that the terminal supports reading of a system message. Further, the network apparatus may send the third information to the terminal.

Optionally, if the terminal sends, to the network apparatus, capability information indicating that reading of the system message is not supported, the network apparatus no longer allocates, to the terminal, a time-frequency resource for obtaining the system message, and after the system message expires, the terminal may trigger a radio link failure.

In a possible design, for a position corresponding to the foregoing first measurement window or system message obtaining window, if the terminal has data to be transmitted, the terminal may discard the corresponding data, so that the terminal measures the first signal or reads the system message. Optionally, in the foregoing case, the terminal needs to transmit a relatively small amount of data.

According to the foregoing method, the terminal may re-measure the first signal. This can ensure that the related information of the first signal is not invalid even when the terminal is in the connected state for a long time, so that service continuity of the terminal can be ensured and service experience can be improved.

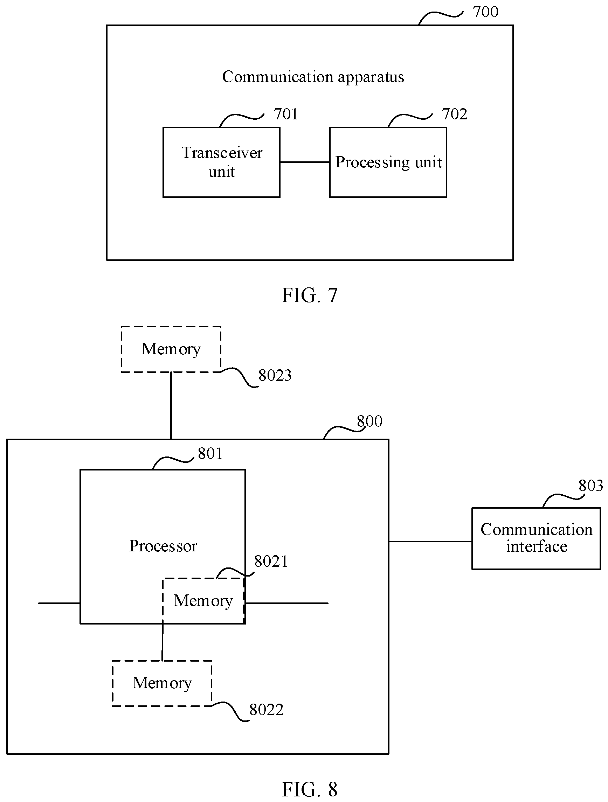

Based on the foregoing embodiments, an embodiment of this application further provides a communication apparatus. Refer to FIG. 7. A communication apparatus 700 may include a transceiver unit 701 and a processing unit 702. The transceiver unit 701 is configured to perform communication of the communication apparatus 700, for example, receive information, a message, or data, or send information, a message, or data. The processing unit 702 is configured to control and manage an action of the communication apparatus 700. The processing unit 702 may further control a step performed by the transceiver unit 701.

For example, the communication apparatus 700 may be specifically the terminal in the foregoing embodiment, or a processor, a chip, a chip system, a functional module, or the like in the terminal. Alternatively, the communication apparatus 700 may be specifically the network apparatus in the foregoing embodiment, or a processor, a chip, a chip system, a functional module, or the like in the network apparatus.

In an embodiment, when the communication apparatus 700 is configured to implement functions of the terminal in the foregoing embodiment, the transceiver unit 701 may be configured to receive first information from a network apparatus, where the first information is used to configure at least one first measurement window of a first signal for the terminal, the terminal does not receive or does not send a second signal in the first measurement window, and the second signal is any signal different from the first signal; and the processing unit 702 may be configured to measure the first signal based on the first measurement window.

Optionally, the first signal may be a signal used for positioning.

In an optional implementation, the transceiver unit 701 may be further configured to: before receiving the first information from the network apparatus, send second information to the network apparatus, where the second information indicates measurement duration required by the terminal to measure the first signal.

For example, the second information may include the measurement duration; or the second information may include a first index, and the first index corresponds to the measurement duration.

Optionally, the first information may be acknowledgment information, and the acknowledgment information indicates that duration of the first measurement window is the same as the measurement duration.

In an example, a start position of the first measurement window is related to an (n+k)^{th} time unit, where an n^{th} time unit is a time unit in which the terminal receives the first information, n is a positive integer, and k is an integer greater than or equal to 0.

In a possible manner, the start position of the first measurement window is an end position of the (n+k)^{th} time unit; or the start position of the first measurement window is an end position of the (n+k)^{th} time unit and an end position of first data transmission, where the first data transmission occupies a part or all of the (n+k)^{th} time unit.

In an optional implementation, when measuring the first signal based on the first measurement window, the processing unit 702 is specifically configured to start to measure the first signal based on the first measurement window before or when first validity duration of related information of the first signal ends.

Optionally, the first validity duration is original validity duration of the related information of the first signal; or the first validity duration is received by the terminal from the network apparatus, and the first validity duration is determined based on the original validity duration.

For example, the transceiver unit 701 may be further configured to send the original validity duration to the network apparatus.

Optionally, an end position of the first measurement window is an end position of the first validity duration.

In a possible design, the first information may include information about a first timer, and duration of the first timer is configured duration of the first measurement window of the first signal. Further, when measuring the first signal based on the first measurement window, the processing unit 702 may be specifically configured to measure the first signal during running of the first timer.

In an optional implementation, the transceiver unit 701 may be further configured to: when the processing unit 702 does not complete measurement of the first signal during running of the first timer, send, to the network apparatus, indication information indicating that measurement of the first signal is not completed; or when the processing unit 702 completes measurement of the first signal during running of the first timer, send, to the network apparatus, indication information indicating that measurement of the first signal is completed.

For example, when sending, to the network apparatus, the indication information indicating that measurement of the first signal is completed, the transceiver unit 701 may be specifically configured to: send, to the network apparatus before the first timer ends, the indication information indicating that measurement of the first signal is completed; or send, to the network apparatus after the first timer ends, the indication information indicating that measurement of the first signal is completed.

Optionally, the first timer is a sleep timer in a discontinuous reception DRX cycle configured by the network apparatus for the terminal; or a duration start position of the first timer is equal to or later than a start position of a sleep timer, and a duration end position of the first timer is earlier than or equal to an end position of the sleep timer.

Optionally, when the at least one first measurement window is a plurality of first measurement windows, the processing unit 702 may be further configured to: when the plurality of first measurement windows are within a time corresponding to a sleep timer in a DRX cycle configured by the network apparatus for the terminal, measure the first signal by using a last first measurement window in the plurality of first measurement windows.

In an example, the transceiver unit 701 may be further configured to: before receiving the first information from the network apparatus, send request information to the network apparatus, where the request information is used to request the network apparatus to configure the first measurement window of the first signal for the terminal.

Optionally, the request information is further used to request the start position of the first measurement window.

In an optional manner, the transceiver unit 701 may be further configured to: before receiving the first information from the network apparatus, send first capability information to the network apparatus, where the first capability information indicates that the terminal cannot simultaneously support measurement of the first signal and receiving or sending of the second signal.

In a possible example, the transceiver unit 701 may be further configured to receive third information from the network apparatus, where the third information is used to configure, for the terminal, a time domain resource for obtaining a system message; and the processing unit 702 may be further configured to obtain the system message based on the third information.

In an optional implementation, the processing unit 702 may be further configured to: when a time domain resource corresponding to the first measurement window overlaps a time domain resource for obtaining a system message, determine, based on a priority for measuring the first signal and a priority for obtaining the system message, to measure the first signal or obtain the system message in an overlapping time domain resource.

For example, the transceiver unit 701 may be further configured to send second capability information to the network apparatus, where the second capability information indicates that the terminal supports reading of a system message.

In an embodiment, when the communication apparatus 700 is configured to implement functions of the terminal in the foregoing embodiment, the processing unit 702 may be configured to determine first information, where the first information is used to configure at least one first measurement window of a first signal for a terminal, the terminal does not receive or does not send a second signal in the first measurement window, and the second signal is any signal different from the first signal; and the transceiver unit 701 may be configured to send the first information to the terminal.

Optionally, the first signal is a signal used for positioning.

For example, the transceiver unit 701 may be further configured to: before the processing unit 702 determines the first information, receive second information from the terminal, where the second information indicates measurement duration required by the terminal to measure the first signal.

In an example, the second information includes the measurement duration; or the second information includes a first index, and the first index corresponds to the measurement duration.

In a manner, the first information is acknowledgment information, and the acknowledgment information indicates that duration of the first measurement window is the same as the measurement duration.

Optionally, a start position of the first measurement window is related to an (n+k)^{th} time unit, where an n^{th} time unit is a time unit in which the terminal device receives the first information, n is a positive integer, and k is an integer greater than or equal to 0.

For example, the start position of the first measurement window is an end position of the (n+k)^{th} time unit; or the start position of the first measurement window is an end position of the (n+k)^{th} time unit and an end position of first data transmission, where the first data transmission occupies a part or all of the (n+k)^{th} time unit.

In an optional implementation, the start position of the first measurement window is before or at an end position of first validity duration of related information of the first signal.

In a possible design, the first validity duration is original validity duration of the related information of the first signal; or the first validity duration is sent by the network apparatus to the terminal, and the first validity duration is determined based on the original validity duration.

Optionally, the transceiver unit 701 may be further configured to receive the original validity duration from the terminal.

For example, an end position of the first measurement window is an end position of the first validity duration.

In a possible manner, the first information includes information about a first timer, and duration of the first timer is configured duration of the first measurement window of the first signal.

Optionally, the transceiver unit 701 may be further configured to: receive, from the terminal, indication information indicating that measurement of the first signal is not completed during running of the first timer; or receive, from the terminal, indication information indicating that measurement of the first signal is completed during running of the first timer.

In an example, when receiving, from the terminal, the indication information indicating that measurement of the first signal is completed during running of the first timer, the transceiver unit 701 may be configured to: receive, from the terminal before the first timer ends, the indication information indicating that measurement of the first signal is completed; or receive, from the terminal after the first timer ends, the indication information indicating that measurement of the first signal is completed.

Optionally, the first timer is a sleep timer in a discontinuous reception DRX cycle configured by the network apparatus for the terminal; or a duration start position of the first timer is equal to or later than a start position of a sleep timer, and a duration end position of the first timer is earlier than or equal to an end position of the sleep timer.

In an optional implementation, the transceiver unit 701 may be further configured to: before sending the first information to the terminal, receive request information from the terminal, where the request information is used to request the network apparatus to configure the first measurement window of the first signal for the terminal.

Optionally, the request information is further used to request the start position of the first measurement window.

For example, the transceiver unit 701 may be further configured to: before the processing unit 702 determines the first information, receive first capability information from the terminal, where the first capability information indicates that the terminal cannot simultaneously support measurement of the first signal and receiving or sending of the second signal.

In an example, the transceiver unit 701 may be further configured to send third information to the terminal, where the third information is used to configure, for the terminal, a time domain resource for obtaining a system message.

In a manner, the transceiver unit 701 may be further configured to receive second capability information from the terminal, where the second capability information indicates that the terminal supports reading of a system message.

It should be noted that, in embodiments of this application, unit division is an example, and is merely a logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

Based on the foregoing embodiments, an embodiment of this application further provides a communication apparatus. Refer to FIG. 8. A communication apparatus 800 may include a processor 801. The processor 801 may be coupled to a memory. Optionally, the memory may be integrated with the processor 801, for example, a memory 8021 in FIG. 8; or may be included in the communication apparatus 800 and separated from the processor 801, for example, a memory 8022 in FIG. 8. Optionally, the memory may alternatively be disposed outside the communication apparatus 800, for example, a memory 8023 in FIG. 8. Optionally, the processor 801 may receive and send a signal, information, a message, or the like through a communication interface 803. The communication interface 803 may be included inside the communication apparatus 800, or may be disposed outside the communication apparatus 800 and connected to the communication apparatus 800.

Specifically, the processor 801 may be a central processing unit (central processing unit, CPU), a network processor (network processor, NP), or a combination of a CPU and an NP. The processor 801 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 801 may be a logic circuit or the like.

In an optional implementation, the memory is configured to store a program, computer instructions, or the like. Specifically, the program may include program code, and the program code includes computer operation instructions. The memory may include a RAM, and may further include a non-volatile memory (non-volatile memory), for example, one or more disk memories. The processor 801 executes an application program stored in the memory, to implement the foregoing functions to implement functions of the communication apparatus 800.

For example, the communication apparatus 800 may be the terminal in the foregoing embodiment, or may be the network apparatus in the foregoing embodiment.

In an embodiment, when the communication apparatus 800 implements the functions of the terminal in the foregoing embodiment, the processor 801 may implement the operations performed by the terminal in the foregoing embodiment. Specifically, for related specific descriptions, refer to the related descriptions in the embodiment shown in FIG. 4. Details are not described herein again.

In another embodiment, when the communication apparatus 800 implements the functions of the network apparatus in the foregoing embodiment, the processor 801 may implement the operations performed by the network apparatus in the foregoing embodiment. Specifically, for related specific descriptions, refer to the related descriptions in the embodiment shown in FIG. 4. Details are not described herein again.

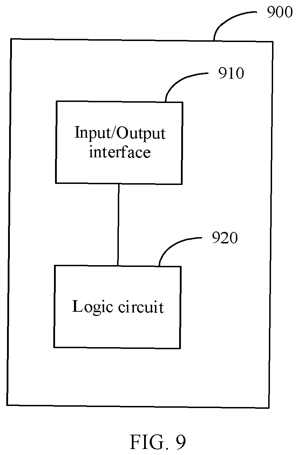

As shown in FIG. 9, an embodiment of this application further provides another communication apparatus 900, configured to implement the functions of the terminal or the network apparatus in the foregoing method. The communication apparatus 900 may be a communication apparatus or a chip in the communication apparatus. The communication apparatus may include at least one input/output interface 910 and a logic circuit 920. The input/output interface 910 may be an input/output circuit. The logic circuit 920 may be a signal processor, a chip, or another integrated circuit that can implement the method in this application.

The at least one input/output interface 910 is configured to input or output information, a signal, data, or the like. For example, when the apparatus is a terminal, the input/output interface 910 is configured to receive first information. For example, when the apparatus is a network apparatus, the input/output interface 910 is configured to output first information.

The logic circuit 920 is configured to perform some or all of the steps in any one of the methods provided in embodiments of this application. For example, when the communication apparatus is a terminal, the communication apparatus is configured to perform the steps performed by the terminal in the possible implementations in the foregoing method embodiments. For example, the logic circuit 920 is configured to measure a first signal based on a first measurement window. When the apparatus is a network apparatus, the apparatus is configured to perform the steps performed by the network apparatus in the possible implementation methods in the foregoing method embodiments. For example, the logic circuit 920 is configured to determine first information.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by another terminal or a network apparatus to the terminal. Alternatively, the chip in the terminal outputs information to another module (for example, a radio frequency module or an antenna) in the terminal, where the information is sent by the terminal to another terminal or a network apparatus.

When the communication apparatus is a chip used in a network apparatus, the chip in the network apparatus implements the functions of the network apparatus in the foregoing method embodiments. The chip in the network apparatus receives information from another module (for example, a radio frequency module or an antenna) in the network apparatus, where the information is sent by the terminal or another network apparatus to the network apparatus; or the chip in the network apparatus outputs information to another module (for example, a radio frequency module or an antenna) in the network apparatus, where the information is sent by the network apparatus to the terminal or another network apparatus.

Based on the foregoing embodiments, an embodiment of this application provides a communication system. The communication system may include the terminal, the network apparatus, and the like in the foregoing embodiments.

An embodiment of this application further provides a computer-readable storage medium. The computer-readable storage medium is configured to store a computer program. When the computer program is executed by a computer, the computer may implement the method provided in the embodiment shown in FIG. 4.

An embodiment of this application further provides a computer program product. The computer program product is configured to store a computer program. When the computer program is executed by a computer, the computer may implement the method provided in the embodiment shown in FIG. 4.

An embodiment of this application further provides a chip, including a processor. The processor is coupled to a memory, and is configured to invoke a program in the memory, so that the chip implements the method provided in the embodiment shown in FIG. 4.

An embodiment of this application further provides a chip. The chip is coupled to a memory, and the chip is configured to implement the method provided in the embodiment shown in FIG. 4.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so as to generate computer-implemented processing. Therefore, the instructions executed on the computer or the another programmable device provide steps for implementing a specific function in one or more processes in the flowcharts and/or in one or more blocks in the block diagrams.

It is clear that persons skilled in the art can make various modifications and variations to this application without departing from the scope of this application. This application is also intended to cover these modifications and variations provided that they fall within the scope of protection defined by the following claims and their equivalent technologies.

## Claims

1. A communication method, comprising:
receiving, by a terminal, first information from a network apparatus, wherein the first information is used to configure at least one first measurement window of a first signal for the terminal, the terminal does not receive or does not send a second signal in the first measurement window, and the second signal is any signal different from the first signal; and
measuring, by the terminal, the first signal based on the first measurement window.

2. The method according to claim 1, wherein the first signal is a signal used for positioning.

3. The method according to claim 1 or 2, wherein before the receiving, by the terminal, the first information from the network apparatus, the method further comprises:
sending, by the terminal, second information to the network apparatus, wherein the second information indicates measurement duration required by the terminal to measure the first signal.

4. The method according to claim 3, wherein
the second information comprises the measurement duration; or
the second information comprises a first index, and the first index corresponds to the measurement duration.

5. The method according to claim 3 or 4, wherein duration of the first measurement window is greater than or equal to the measurement duration.

6. The method according to claim 3 or 4, wherein the first information is acknowledgment information, and the acknowledgment information indicates that duration of the first measurement window is the same as the measurement duration.

7. The method according to any one of claims 1 to 4, wherein a start position of the first measurement window is related to an (n+k)^{th} time unit, wherein an n^{th} time unit is a time unit in which the terminal receives the first information, n is a positive integer, and k is an integer greater than or equal to 0.

8. The method according to claim 7, wherein
the start position of the first measurement window is a start position of the (n+k)^{th} time unit;
the start position of the first measurement window is a start position of the (n+k)^{th} time unit and an end position of first data transmission, wherein the first data transmission occupies a part or all of the (n+k)^{th} time unit;
the start position of the first measurement window is an end position of the (n+k)^{th} time unit; or
the start position of the first measurement window is an end position of the (n+k)^{th} time unit and an end position of the first data transmission, wherein the first data transmission occupies a part or all of the (n+k)^{th} time unit.

9. The method according to any one of claims 1 to 8, wherein the measuring, by the terminal, the first signal based on the first measurement window comprises:
starting, by the terminal, to measure the first signal based on the first measurement window before or when first validity duration of related information of the first signal ends.

10. The method according to claim 9, wherein an end position of the first measurement window is an end position of the first validity duration.

11. The method according to any one of claims 1 to 4, wherein the first information comprises information about a first timer, and duration of the first timer is configured duration of the first measurement window of the first signal; and
the measuring, by the terminal, the first signal based on the first measurement window comprises:
measuring, by the terminal, the first signal during running of the first timer.

12. The method according to claim 11, wherein the first timer is a sleep timer in a discontinuous reception DRX cycle configured by the network apparatus for the terminal; or
a duration start position of the first timer is equal to or later than a start position of the sleep timer, and a duration end position of the first timer is earlier than or equal to an end position of the sleep timer.

13. The method according to any one of claims 1 to 12, wherein the first measurement window is in a discontinuous reception DRX inactive-state period of the terminal.

14. The method according to any one of claims 1 to 4, wherein when the at least one first measurement window is a plurality of first measurement windows, the method further comprises:
when the plurality of first measurement windows are within a time corresponding to a sleep timer in a discontinuous reception DRX cycle configured by the network apparatus for the terminal, measuring, by the terminal, the first signal by using a last first measurement window in the plurality of first measurement windows.

15. The method according to any one of claims 1 to 14, wherein before the receiving, by the terminal, first information from the network apparatus, the method further comprises:
sending, by the terminal, request information to the network apparatus, wherein the request information is used to request the network apparatus to configure the first measurement window of the first signal for the terminal.

16. The method according to claim 15, wherein the request information is further used to request the start position of the first measurement window.

17. The method according to any one of claims 1 to 16, wherein before the receiving, by the terminal, the first information from the network apparatus, the method further comprises:
sending, by the terminal, first capability information to the network apparatus, wherein the first capability information indicates that the terminal cannot simultaneously support measurement of the first signal and receiving or sending of the second signal.

18. The method according to any one of claims 1 to 17, wherein when a time domain resource corresponding to the first measurement window overlaps a time domain resource for obtaining a system message, the method further comprises:
determining, by the terminal based on a priority for measuring the first signal and a priority for obtaining the system message, to measure the first signal or obtain the system message in an overlapping time domain resource.

19. The method according to any one of claims 1 to 18, wherein when the time domain resource corresponding to the first measurement window overlaps the time domain resource for obtaining the system message, the method further comprises:
preferentially measuring, by the terminal, the first signal.

20. The method according to any one of claims 1 to 19, wherein the method further comprises:
sending, by the terminal, indication information indicating that measurement of the first signal is completed.

21. A communication method, comprising:
determining, by a network apparatus, first information, wherein the first information is used to configure at least one first measurement window of a first signal for a terminal, the terminal does not receive or does not send a second signal in the first measurement window, and the second signal is any signal different from the first signal; and
sending, by the network apparatus, the first information to the terminal.

22. The method according to claim 21, wherein the first signal is a signal used for positioning.

23. The method according to claim 21 or 22, wherein before the determining, by the network apparatus, the first information, the method further comprises:
receiving, by the network apparatus, second information from the terminal, wherein the second information indicates measurement duration required by the terminal to measure the first signal.

24. The method according to claim 23, wherein
the second information comprises the measurement duration; or
the second information comprises a first index, and the first index corresponds to the measurement duration.

25. The method according to claim 23 or 24, wherein duration of the first measurement window is greater than or equal to the measurement duration.

26. The method according to claim 23 or 24, wherein the first information is acknowledgment information, and the acknowledgment information indicates that duration of the first measurement window is the same as the measurement duration.

27. The method according to any one of claims 21 to 24, wherein a start position of the first measurement window is related to an (n+k)^{th} time unit, wherein an n^{th} time unit is a time unit in which the terminal device receives the first information, n is a positive integer, and k is an integer greater than or equal to 0.

28. The method according to claim 27, wherein
the start position of the first measurement window is a start position of the (n+k)^{th} time unit;
the start position of the first measurement window is a start position of the (n+k)^{th} time unit and an end position of first data transmission, wherein the first data transmission occupies a part or all of the (n+k)^{th} time unit;
the start position of the first measurement window is an end position of the (n+k)^{th} time unit; or
the start position of the first measurement window is an end position of the (n+k)^{th} time unit and an end position of the first data transmission, wherein the first data transmission occupies a part or all of the (n+k)^{th} time unit.

29. The method according to any one of claims 21 to 28, wherein the start position of the first measurement window is before or at an end position of first validity duration of related information of the first signal.

30. The method according to claim 29, wherein an end position of the first measurement window is the end position of the first validity duration.

31. The method according to any one of claims 21 to 24, wherein the first information comprises information about a first timer, and duration of the first timer is configured duration of the first measurement window of the first signal.

32. The method according to claim 31, wherein the first timer is a sleep timer in a discontinuous reception DRX cycle configured by the network apparatus for the terminal; or
a duration start position of the first timer is equal to or later than a start position of the sleep timer, and a duration end position of the first timer is earlier than or equal to an end position of the sleep timer.

33. The method according to any one of claims 21 to 32, wherein the first measurement window is in a discontinuous reception DRX inactive-state period of the terminal.

34. The method according to any one of claims 21 to 33, wherein before the sending, by the network apparatus, the first information to the terminal, the method further comprises:
receiving, by the network apparatus, request information from the terminal, wherein the request information is used to request the network apparatus to configure the first measurement window of the first signal for the terminal.

35. The method according to claim 34, wherein the request information is further used to request the start position of the first measurement window.

36. The method according to any one of claims 21 to 35, wherein before the determining, by the network apparatus, the first information, the method further comprises:
receiving, by the network apparatus, first capability information from the terminal, wherein the first capability information indicates that the terminal cannot simultaneously support measurement of the first signal and receiving or sending of the second signal.

37. The method according to any one of claims 21 to 36, wherein the method further comprises:
receiving, by the network apparatus, indication information indicating that measurement of the first signal is completed.

38. A communication method, comprising:
receiving, by a terminal, first information, wherein the first information comprises information about a first timer, and the first timer is used to measure a first signal;
measuring, by the terminal, the first signal during running of the first timer, wherein the first signal is a signal used for positioning; and
when the terminal completes measurement of the first signal before the first timer ends, sending, by the terminal to a network apparatus before the first timer ends, indication information indicating that measurement of the first signal is completed.

39. The method according to claim 38, further comprising:
receiving, by the terminal, data scheduling of the network apparatus before measurement of the first signal is completed and the first timer ends.

40. The method according to claim 39, wherein the receiving data scheduling of the network apparatus comprises:
receiving and/or sending a second signal, wherein the second signal is a signal different from the first signal.

41. A communication method, comprising:
determining, by a network apparatus, first information, wherein the first information comprises information about a first timer, the first timer is used to measure a first signal, and the first signal is a signal used for positioning;
sending, by the network apparatus, the first information; and
before the first timer ends, receiving, by the network apparatus, indication information indicating that measurement of the first signal is completed.

42. The method according to claim 41, wherein after the receiving, by the network apparatus, indication information indicating that measurement of the first signal is completed, the method further comprises:
performing, by the network apparatus, data scheduling.

43. The method according to claim 42, wherein the performing, by the network apparatus, data scheduling comprises:
sending and/or receiving a second signal, wherein the second signal is a signal different from the first signal.

44. The method according to any one of claims 1 to 43, wherein the first signal is a global navigation satellite system GNSS signal.

45. A communication apparatus, comprising a module or a unit configured to perform the method according to any one of claims 1 to 20 and 44, or comprising a module or a unit configured to perform the method according to any one of claims 38 to 40 and 44.

46. A communication apparatus, comprising a module or a unit configured to perform the method according to any one of claims 21 to 37 and 44, or comprising a module or a unit configured to perform the method according to any one of claims 41 to 44.

47. A communication apparatus, comprising a processor, wherein the processor is configured to invoke computer instructions in a memory to perform the method according to any one of claims 1 to 20 and 44, or perform the method according to any one of claims 38 to 40 and 44.

48. The apparatus according to claim 47, further comprising the memory.

49. The apparatus according to claim 47 or 48, further comprising a communication interface, wherein the communication interface is configured to receive and send a signal.

50. A communication apparatus, comprising a processor, wherein the processor is configured to invoke computer instructions in a memory to perform the method according to any one of claims 21 to 37 and 44, or perform the method according to any one of claims 41 to 44.

51. The apparatus according to claim 50, further comprising the memory.

52. The apparatus according to claim 50 or 51, further comprising a communication interface, wherein the communication interface is configured to receive and send a signal.

53. A communication system, comprising the communication apparatus according to any one of claims 45 and 47 to 49, and the communication apparatus according to any one of claims 46 and 50 to 52.

54. A computer-readable storage medium, wherein the computer-readable storage medium stores computer-executable instructions, and when the computer-executable instructions are invoked by the computer, the method according to any one of claims 1 to 20 and 44 is performed, or the method according to any one of claims 21 to 37 and 44 is performed, or the method according to any one of claims 38 to 40 and 44 is performed, or the method according to any one of claims 41 to 44 is performed.

55. A computer program product, comprising instructions, wherein when the instructions are run on a computer, the method according to any one of claims 1 to 20 and 44 is performed, or the method according to any one of claims 21 to 37 and 44 is performed, or the method according to any one of claims 38 to 40 and 44 is performed, or the method according to any one of claims 41 to 44 is performed.
